# EUROPÄISCHE PATENTSCHRIFT

(11) **EP 1 458 780 B1**
(45) Veröffentlichungstag und Bekanntmachung des Hinweises auf die Patenterteilung: **23.02.2011**
(21) Anmeldenummer: 02791754.1
(22) Anmeldetag: 02.12.2002
(51) Int. Cl.: C08G 18/10, C08G 18/48

(54) **MONOMERENARME NCO-HALTIGE PREPOLYMERE AUF DER BASIS VON ISOPHORONDIISOCYANAT**
PREPOLYMERS ON THE BASIS OF ISOPHORONE DIISOCYANATE WHICH ARE LOW IN MONOMERS AND CONTAIN NCO
PREPOLYMERE CONTENANT DU NCO, PAUVRE EN MONOMERES ET A BASE D'ISOPHORONDIISOCYANATE

(30) Priorität: 14.12.2001 DE 10161386
(43) Veröffentlichungstag der Anmeldung: 22.09.2004
(73) Patentinhaber: Bayer MaterialScience AG, 51368 Leverkusen (DE)
(72) Erfinder: HOFACKER, Steffen, 51519 Odenthal (DE); GERTZMANN, Rolf, 51377 Leverkusen (DE); FLECK, Olaf, 51467 Bergisch Gladbach (DE); RUTTMANN, Gerhard, 51399 Burscheid (DE); BRÜMMER, Hanno,, League City, Texas 77573 (US)
(86) Internationale Anmeldenummer: PCT/EP2002/013589
(87) Internationale Veröffentlichungsnummer: WO 2003/051950

(56) Entgegenhaltungen:
- WO-A-99/29752
- DD-A- 151 466
- DE-A- 10 015 891

## Beschreibung

Die vorliegende Erfindung betrifft monomerenarme NCO-haltige Prepolymere auf Basis von Isophorondiisocyanat (IPDI) und Polypropylenoxidglykolen, ein Verfahren zu deren Herstellung, sowie deren Verwendung.

Aliphatische und cycloaliphatische Diisocyanate werden aufgrund Ihrer guten Licht- und Witterungsbeständigkeit in hochwertigen Polyurethanbeschichtungen, Dichtstoffen und Vergussmassen eingesetzt (vgl. z.B. Wagner Sarx, Lackkunstharae, 5. Auf lage, Carl Hanser Verlag, München, 1971, Seite 153 bis 173). Im Zusammenhang mit der stärkeren Beachtung der Umwelthygiene sind besonders lösemittelfreie Systeme interessant geworden. Eine Möglichkeit der Herstellung von solchen Systemen ist z.B. die Verwendung von NCO-haltigen Prepolymeren (NCO-Prepolymere). NCO-Prepolymere und daraus resultierende Bindemittel sind in großer Fülle bekannt (z.B. EP-A 0 497 131 oder EP-A 1 138 707).

NCO-Prepolymere des Standes der Technik werden durch Umsetzung von höhermolekularen Polyhydroxylverbindungen wie z.B. Polyether- oder Polyester-Polyolen mit überschüssigen Mengen Di- oder Polyisocyanat hergestellt. Dabei ist es von Vorteil, wenn die Isocyanatgruppen unterschiedliche Reaktivitäten aufweisen. Durch diese Eigenschaft wird der unerwünschte Monomerengehalt durch diese sogenannte Selektivität zurückgedrängt. Die Produkte weisen zudem niedrige Viskositäten und bessere technische Verarbeitbarkeit auf.

Isophorondiisocyanat (3-Isocyanatomethyl-3,5,5-trimethylcyclohexylisocyanat, IPDI) besitzt zwei solche unterschiedlich (selektiv) reaktive Isocyanatgruppen. Jedoch gelingt es nicht ohne weiteres, den Restmonomerengehalt eines damit hergestellten Prepolymers unterhalb von 2,0 Gew.% abzusenken (z.B. EP-A 0 497 131, Beispiel 2 oder EP-A 1 138 707 Vergleichsbeispiel). Hierzu ist es in der Regel notwendig, einen sich anschließenden und technisch aufwendigen Destillationsschritt (Dünnschichtprozess) anzuschließen um monomere Bestandteile, z.B. IPDI, abzutrennen.

Als weitere Möglichkeit beschreibt die DD-A 151466, bei der zur Herstellung von monomerenarmen Prepolymeren durch Umsetzung von Di- oder Polyisocyanaten mit Polyalkoholen hydroxyfunktionelle metallorganische Katalysatoren einzusetzen. Allerdings gelingt die Herstellung solcher monomerenarmen Prepolymeren nur unter Verwendung von Lösemitteln, welche teilweise im Prepolymeren verbleiben. Aus arbeitshygienischen Gesichtspunkten vor allem bei späterem Einsatz dieser Prepolymere in Lacken für Beschichtungen in schlecht belüfteten Räumen ist das nachteilig. Zudem wird ein niedriger Restmonomerengehalt an Diisocyanat gemäß der DD-A 151466 nur durch den Einsatz von hohen Gehalten an hydroxyfunktionellen metallorganische Katalysatoren erreicht. Das bedeutet aber, dass maßgebliche Anteile an Isocyanat mit der Hydroxyfunktion des Katalysators abreagieren und nicht zum weiteren Polymeraufbau zur Verfugung stehen. Durch diese Kettenabrecherfunktion des Katalysators werden z.B. auch mechanische Eigenschaften, der aus den Prepolymeren zu formulierenden Lacken, nachteilig beeinflusst.

Aufgabe der vorliegenden Erfindung war es daher, lösemittelfreie NCO-haltigen Prepolymere auf Basis von IPDI und Polyhydroxylverbindungen mit einem Restmonomerengehalt an IPDI < 2,0 Gew.% bereitzustellen, die ohne ein Destillationsverfahren zwecks Entfernung der Monomere direkt einsetzbar sein sollten und die genannten Nachteile nicht aufweisen.

Überraschender Weise wurde nun gefunden, dass die gestellte Aufgabe durch den Einsatz von *Impact*-Polyethern, Polypropylenoxidglykolen, die nach dem *Impact-*Verfahren hergestellt sind (z.B. US-A 3 278 459, WO 97/29 146, WO99/29752 oder EP-A 0 573 206), gelöst werden konnte. Der Monomerengehalt ist, ohne jeden aufwendigen Destillationsschritt, kleiner als 2,0 Gew.% und damit niedriger als bei Einsatz von konventionellen, nach dem KOH-Verfahren hergestellten Polypropylenoxidglykolen.

Gegenstand der Erfindung sind demnach lösemittelfreie, monomerenarme NCO-haltige Prepolymere mit einem einem NCO-Gehalt von 2,0 bis 5,0 Gew.%, bevorzugt 3,0 bis 4,5 Gew.% und besonders bevorzugt 3,5 bis 4,2 Gew.%, mit einem Gehalt an restmonomerem 3-Isocyanatomethyl-3,5,5-trimethylcyclohexylisocyanat (IPDI) von kleiner als 2,00 Gew.% und einer Viskosität von 5000 bis 20000 mPas bei 23°C, bevorzugt 8000 bis 15000 mPas bei 23°C und besonders bevorzugt 9000 bis 13000 mPas bei 23°C, erhältlich durch Umsetzung von 3-Isocyanatomethyl-3,5,5-trimethylcyclohexylisocyanat (IDPI)
und
mindestes einem unter Verwendung eines Doppelmetallcyanid-Katalysators auf Basis von Propylenoxid hergestellten Polyproyplenoxidglykols einer mittleren Hydroxylfunktionalität zwischen von 1,80 bis 2,00, bevorzugt 1,90 bis 2,00 und besonders bevorzugt 1,98 und 2,00 und eines mittleren Molekulargewichts (Mₙ) zwischen 500 bis 5000 g/mol (sogenannter *Impact*-Polyether),
unter Einhaltung eines NCO/OH-Verhältnises von 2,2 bis 1,5, bevorzugt von 2,0 bis 1,7 und besonders bevorzugt von 1,98 bis 1,80 und in Gegenwart mindestens eines Katalysators bei 20 bis 100°C.

Weiterhin ist ein Verfahren zur Herstellung der vorstehend bezeichneten lösemittelfreien, monomerenarmen NCO-haltigen Prepolymeren durch Umsetzung von 3-Isocyanatomethyl-3,5,5-trimethylcyclohexylisocyanat mit mindestes einem unter Verwendung eines Doppelmetallcyanid-Katalysators auf Basis von Propylenoxid hergestellten Polyproyplenoxidglykol einer mittleren Hydroxylfunktionalität zwischen von 1,80 bis 2,00, bevorzugt 1,90 bis 2,00 und besonders bevorzugt 1,98 und 2,00 und eines mittleren Molekulargewichts (Mₙ) zwischen 500 bis 5000 g/mol (sogenannter *Impact*-Polyether) unter Einhaltung eines NCO/OH-Verhältnises von 2,2 bis 1,5, bevorzugt von 2,0 bis 1,7 und besonders bevorzugt von 1,98 bis 1,80 und in Gegenwart mindestens eines Katalysators bei 20 bis 100°C Gegenstand der Erfindung.

Gegenstand der Erfindung ist darüber hinaus auch die Verwendung der erfindungsgemäßen lösemittelfreien, monomerenarmen NCO-haltigen Prepolymeren als Bindemittel und/oder Bindemittelkomponente in Polyurethanbeschichtungsmitteln, -dichtmassen, -klebstoffen und/oder -vergussmassen.

Für die Herstellung der erfindungsgemäßen lösemittelfreien, monomerenarmen NCO-haltigen Prepolymeren wird IPDI zusammen mit einem Katalysator vorgelegt und bei einer Temperatur zwischen 20°C und 100°C mindestens ein *Impact-*Polyether dazugegeben. Das NCO/OH-Verhältnis liegt dabei zwischen 2,2 und 1,5, bevorzugt zwischen 2,0 und 1,7 und ganz besonders bevorzugt zwischen 1,98 und 1,80. Der Restmonomerengehalt an IPDI des erfindungsgemäßen Prepolymers ist kleiner als 2,00 Gew.% und bevorzugt kleiner 1,95 Gew.-%.

Zur Herstellung der erfindungsgemäßen lösemittelfreien, monomerenarmen NCO-haltigen Prepolymere werden bevorzugt solche *Impact*-Polyether eingesetzt, deren mittlere OH-Funktionalität zwischen 1,98 und 2,00 liegt und ein mittleres Molekulargewicht (Mₙ) zwischen 500 bis 5000 g/mol aufweisen.

Diese Polyetherpolyole, sogenannte *Impact*-Polyether, wurden durch Polymerisation von Propylenoxid mit Hilfe eines DMC-Katalysators wie z.B. Zinkhexacyanocobaltat bei z.B. 130°C nach einem in der WO 1997/029 146 (Beispiele 1 bis 5) beschriebenen Prozess mit kontinuierlicher Starterdosierung hergestellt. Als kontinuierliche Starter eignen sich beispielsweise Wasser, oder niedermolekulare Polyole mit einem Molekulargewicht von weniger als 300 g/mol wie z.B. Glycerin, Propylenglycol, Dipropylenglycol, Ethylenglycol, Trimethylolpropan, Sorbitol, etc..

Als Katalysatoren für die Umsetzung von IPDI und den *Impact*-Polyethern können handelsübliche Organometallverbindungen der Elemente Aluminium, Zinn, Zink, Titan, Mangan, Eisen, Bismut oder auch Zirkonium wie z.B. Dibutylzinnlaurat, Zinkoctoat, Titantetraisopropylat verwendet werden. Darüber hinaus eignen sich aber auch tertiäre Amine wie z.B. 1,4-Diazabicyclo-[2.2.2]-octan.

### Beispiel

### Vorbemerkung:

Um eine Vergleichbarkeit der resultierenden Kennzahlen zu gewährleisten, wurden die eingesetzten Rohstoffmengen anhand der jeweiligen zuvor bestimmten Äquivalentgewichte angepasst.

Die in den nachfolgenden Beispielen verwendeten *Impact*-Polyether wurden beispielsweise in einem Polymerisationsprozess durch Umsetzung von Propylenoxid mit Hilfe eines DMC-Katalysators bei 130°C nach einem in WO 97/29 146 Beispiel 3-5 beschriebenen Prozess mit kontinuierlicher Starterdosierung hergestellt.

Arcol^{®} PPG 2000 als Polypropylenoxidglykol mit einem zahlenmittleren Molekulargewicht (Mn) von 2000 g/mol ist somit beispielsweise wie folgt herstellbar:

30 mg Zinkhexacyanocobaltat/tert-Butylalkohol Komplex, welcher nach Beispiel 8-1 aus EP-A 0 743 093 hergestellt werden kann, wird in 200 ml Toluol in einem Stahlreaktorgefäß suspendiert. 20 g Propylenoxid, welches 1,9 Gew.-% Propylenglycol enthält wird in den Reaktor zugegeben und auf 130°C zur Aktivierung des Katalysators erhitzt. Nach Abfall des Innendrucks im Reaktor, werden 300 g Propylenoxid mit einem Gehalt von 3,8 Gew.-% an Propylenglykol kontinuierlich bei 130°C über 2,5 Stunden zudosiert. Der kontinuierliche Starter ist hier Propylenglykol. Das erhaltene Polyetherpolyol besitzt eine Hydroxylzahl von 56,2 mg KOH/g und ein zahlenmittleres Molekulargewicht (Mn) von 2000 g/mol.

In Analogie zur beispielhaften Herstellung von Arcol^{®} PPG 2000 ist beispielsweise auch Arcol^{®} PPG 1000 als Polypropylenoxidglykol mit einem zahlenmittleren Molekulargewicht (Mn) von 1000 g/mol zugänglich.

### Verwendung von Impact-Polyethern:

### Beispiel 1

222,03 g (Äquivalentgewicht = 111,44 g/val) 3-Isocyanatomethyl-3,5,5-trimethylcyclohexylisocyanat (Desmodur^{®} I, Handelsprodukt Bayer AG, Leverkusen) wurden mit 0,10 g Benzoylchlorid unter Inertgas (Stickstoff) vorgelegt, verrührt und anschließend mit 1,00 g Dibutylzinnlaurat versetzt. Nach Aufheizen auf 45°C wurden 549,89 g (Äquivalentgewicht = 1003,58 g/val) Arcol^{®} PPG 2000 (Polypropylenoxidglykol, Mₙ = 2000 g/mol, Handelsprodukt, Bayer AG, Leverkusen) zudosiert. Nach Erreichen des theoretischen NCO-Gehaltes von 7,9 Gew.-% wurden weitere 249,28 g (Äquivalentgewicht = 500,45 g/val) Arcol^{®} PPG 1000 (Polypropylenoxidglykol, Mₙ = 1000 g/mol, Handelsprodukt, Bayer AG, Leverkusen) zudosiert. Nach vollständiger Zugabe wurde die Reaktionsmischung bis zur Erreichung eines NCO-Gehaltes von 3,9 Gew.-% auf 60°C erhitzt. Danach kühlte man auf Raumtemperatur ab.

Das erfindungsgemäße Prepolymer besitzt eine Viskosität von 10800 mPas (23°C, Plattenviskosimeter), einen NCO-Gehalt von 3,9 Gew.-% und einen Monomerengehalt an IPDI von 1,80 Gew.-% (gaschromatographische Bestimmung).

### Beispiel 2

227,82 g (Äquivalentgewicht = 111,44 g/val) 3-Isocyanatomethyl-3,5,5-trimethylcyclohexylisocyanat (Desmodur^{®} I, Handelsprodukt Bayer AG, Leverkusen) wurden mit 0,10 g Dibutylzinnlaurat unter Inertgas (Stickstoff) vorgelegt und verrührt. Nach Aufheizen auf 55°C wurden 538,59 g (Äquivalentgewicht = 1003,58 g/val) Arcol^{®} PPG 2000 (Polypropylenoxidglykol, Mₙ = 2000 g/mol, Handelsprodukt, Bayer AG, Leverkusen) zudosiert. Nach Erreichen des theoretischen NCO-Gehaltes von 8,3 Gew.-% wurden weitere 255,78 g (Äquivalentgewicht = 500,45 g/val) Arcol^{®} PPG 1000 (Polypropylenoxidglykol, Mₙ = 1000 g/mol, Handelsprodukt, Bayer AG, Leverkusen) zudosiert. Nach dem Erreichen eines NCO-Gehaltes von 3,9 Gew.-%. wurden 0,1 g Benzoylchlorid zugesetzt und auf Raumtemperatur abgekühlt.

Das erfindungsgemäße Prepolymer besitzt eine Viskosität von 11300 mPas (23°C, Plattenviskosimeter), einen NCO-Gehalt von 3,9 Gew.-% und einen Monomerengehalt an IPDI von 1,90 Gew.-% (gaschromatographische Bestimmung).

### Verwendung von konventionellen Polyethern

### Vergleichsbeisniel 1

224,36 g (Äquivalentgewicht = 111,58 g/val) 3-Isocyanatomethyl-3,5,5-trimethylcyclohexylisocyanat (Desmodur^{®} I, Handelsprodukt Bayer AG, Leverkusen) wurden mit 0,10 g Benzoylchlorid unter Inertgas (Stickstoff) vorgelegt, verrührt und anschließend mit 1,00 g Dibutylzinnlaurat versetzt. Nach Aufheizen auf 45°C werden 546,15 g (Äquivalentgewicht = 987,68 g/val) Desmophen^{®} 3600Z (Polypropylenoxidglykol, Mₙ = 2000 g/mol, Handelsprodukt, Bayer AG, Leverkusen) zudosiert. Nach Erreichen des theoretischen NCO-Gehaltes von 7,9 Gew.-% werden weitere 250,68 g (Äquivalentgewicht = 498,67 g/val) Desmophen^{®} 1600U (Polypropylenoxidglykol, Mₙ = 1000 g/mol, Handelsprodukt, Bayer AG, Leverkusen) zudosiert. Nach vollständiger Zugabe wurde die Reaktionsmischung bis zur Erreichung eines NCO-Gehaltes von 3,9 Gew.-% auf 60°C erhitzt. Danach kühlte man auf Raumtemperatur ab.

Das Prepolymer besitzt eine Viskosität von 9200 mPas (23°C, Plattenviskosimeter), einen NCO-Gehalt von 3,9 Gew.-% und einen Monomerengehalt an IPDI von 2,15 Gew.-% (gaschromatographische Bestimmung).

### Versleichsbeispiel 2

230,00 g (Äquivalentgewicht = 111,44 g/val) 3-Isocyanatomethyl-3,5,5-trimethylcyclohexylisocyanat (Desmodur^{®} I, Handelsprodukt Bayer AG, Leverkusen) wurden mit 0,10 g Dibutylzinnlaurat unter Inertgas (Stickstoff) vorgelegt und verrührt. Nach Aufheizen auf 55°C wurden 535,12 g (Äquivalentgewicht = 987,68 g/val) Desmophen^{®} 3600Z (Polypropylenoxidglykol, Mₙ = 2000 g/mol, Handelsprodukt, Bayer AG, Leverkusen) zudosiert. Nach Erreichen des theoretischen NCO-Gehaltes von 8,4 Gew.-% wurden weitere 257,08 g (Äquivalentgewicht = 498,22 g/val) Desmophen^{®} 1600U (Polypropylenoxidglykol, Mₙ = 1000 g/mol, Handelsprodukt, Bayer AG, Leverkusen) zudosiert. Nach dem Erreichen eines NCO-Gehaltes von 3,9 Gew.-% wurden 0,1 g Benzoylchlorid zugesetzt und auf Raumtemperatur abgekühlt.

Das Prepolymer besitzt eine Viskosität von 9200 mPas (23°C), einen NCO-Gehalt von 3,9 Gew.-% und einen Monomerengehalt an IPDI von 2,07 Gew.-% (gaschromatographische Bestimmung).

## Patentansprüche

1. Monomerenarme, lösemittelfreie NCO-haltige Prepolymere mit einem Gehalt an restmonomerem 3-Isocyanatomethyl-3,5,5-trimethylcyclohexylisocyanat (IPDI) von kleiner als 2,00 Gew.% und einer Viskosität von 5000 bis 20000 mPas bei 23°C erhältlich durch Umsetzung von
3-Isocyanatomethyl-3,5,5-trimethylcyclohexylisocyanat (IDPI)
und
mindestes einem unter Verwendung eines Doppelmetallcyanid-Katalysators auf Basis von Propylenoxid hergestellten Polypropylenoxidglykols einer mittleren Hydroxylfunktionalität zwischen 1,80 und 2,00 und eines mittleren Molekulargewichts (Mₙ) zwischen 500 bis 5000 g/mol (sogenannter *Impact*-Polyether),
unter Einhaltung eines NCO/OH-Verhältnises von 2,2 bis 1,5 und in Gegenwart mindestens eines Katalysators bei 20 bis 100°C.

2. Monomerenarme, lösemittelfreie NCO-haltige Prepolymere nach Anspruch 1, mit einem NCO/OH-Verhältnis von 1,98 bis 1,80.

3. Monomerenarme, lösemittelfreie NCO-haltige Prepolymere nach Anspruch 1 oder 2, mit einer Viskosität von 9000 bis 13000 mPas bei 23°C.

4. Monomerenarme, lösemittelfreie NCO-haltige Prepolymere nach Anspruch 1, 2 oder 3, mit einem Restmonomerengehalt von kleiner gleich 1,95 Gew.-%.

5. Monomerenarme, lösemittelfreie NCO-haltige Prepolymer nach Anspruch 1, 2, 3 oder 4, **dadurch gekennzeichnet, dass** die eingesetzten Polypropylenoxidglykole eine Hydroxylfunktionalität von 1,80 bis 2,00 aufweisen.

6. Monomerenarme, lösemittelfreie NCO-haltigen Prepolymere nach Ansprüchen 1 bis 5, **dadurch gekennzeichnet, dass** Mischungen aus Polypropylenoxidglykolen mit einem zahlenmittleren Molekulargewicht (Mn) von 1000 und 2000 g/mol und einer Hydroxyfunktionalität von 1,98 bis 2,00 verwendet werden.

7. Verfahren zur Herstellung von nonomerenarmen, lösemittelfreien NCO-haltigen Prepolymeren nach Ansprüchen 1 bis 6, **dadurch gekennzeichnet, dass** 3-Isocyanatomethyl-3,5,5-trimethylcyclohexylisocyanat (IPDI) und mindestens ein unter Verwendung eines Doppelmetallcyanid-Katalysators auf Basis von Propylenoxid hergestelltes Polypropylenoxidglykol einer mittleren Hydroxylfunktionalität zwischen 1,98 und 2,00 und eines mittleren Molekulargewichts (Mₙ) zwischen 500 bis 5000 g/mol (sogenannter *Impact-*Polyether) in Gegenwart mindestens eines Katalysators bei 20 bis 100°C miteinander umgesetzt werden.

8. Verwendung von monomerenarmen, lösemittelfreien NCO-haltigen Prepolymeren nach Ansprüchen 1 bis 6 als Bindemittel und/oder Bindemittelkomponente in Polyurethanbeschichtungsmitteln, -klebstoffen, -dichtmassen und/oder -vergussmassen.

## Claims

1. Low-monomer-content, solvent-free, NCO-containing prepolymers having a residual 3-isocyanatomethyl-3,5,5-trimethylcyclohexyl isocyanate (IPDI) monomer content of less than 2.00% by weight and a viscosity of from 5000 to 20 000 mPas at 23°C, obtainable by reacting
3-isocyanatomethyl-3,5,5-trimethylcyclohexyl isocyanate (IDPI) and
at least one polypropylene oxide glycol which is prepared on the basis of propylene oxide using a double metal cyanide catalyst and has an average hydroxyl functionality of between 1.80 and 2.00 and an average molecular weight (Mₙ) of between 500 to 5000 g/mol (so-called *Impact* polyether),
with compliance with an NCO/OH ratio of 2.2 to 1.5 and in the presence of at least one catalyst at from 20 to 100°C.

2. Low-monomer-content, solvent-free, NCO-containing prepolymers according to Claim 1, having an NCO/OH ratio of from 1.98 to 1.80.

3. Low-monomer-content, solvent-free, NCO-containing prepolymers according to Claim 1 or 2, having a viscosity of from 9000 to 13 000 mPas at 23°C.

4. Low-monomer-content, solvent-free, NCO-containing prepolymers according to Claim 1, 2 or 3, having a residual monomer content of less than or equal to 1.95% by weight.

5. Low-monomer-content, solvent-free, NCO-containing prepolymers according to Claim 1, 2, 3 or 4, **characterized in that** the polypropylene oxide glycols used have a hydroxyl functionality of from 1.80 to 2.00.

6. Low-monomer-content, solvent-free, NCO-containing prepolymers according to Claims 1 to 5, **characterized in that** mixtures of polypropylene oxide glycols having a number-average molecular weight (Mn) of 1000 and 2000 g/mol and a hydroxyl functionality of from 1.98 to 2.00 are used.

7. A process for preparing low-monomer-content, solvent-free, NCO-containing prepolymers according to Claims 1 to 6, **characterized in that** 3-isocyanatomethyl-3,5,5-trimethylcyclohexyl isocyanate (IPDI) and at least one polypropylene oxide glycol which is prepared on the basis of propylene oxide using a double metal cyanide catalyst and has an average hydroxyl functionality of between 1.98 and 2.00 and an average molecular weight (Mₙ) of between 500 to 5000 g/mol (so-called *Impact* polyether) are reacted with one another in the presence of at least one catalyst at from 20 to 100°C.

8. Use of low-monomer-content, solvent-free, NCO-containing prepolymers according to Claims 1 to 6 as binders and/or a binder component in polyurethane coating compositions, polyurethane adhesives, polyurethane sealants and/or polyurethane casting compounds.

## Revendications

1. Prépolymères pauvres en monomères, exempts de solvants, contenant NCO, présentant une teneur en 3-isocyanatométhyl-3,5,5-triméthylcyclohexylisocyanate monomère résiduel (IPDI) inférieure à 2,00% en poids et une viscosité de 5000 à 20 000 mPa.s à 23°C pouvant être obtenus par transformation de 3-isocyanatométhyl-3,5,5-triméthylcyclohexylisocyanate (IDPI) et
d'au moins un poly(oxyde de propylène)-glycol préparé à base d'oxyde de propylène avec utilisation d'un catalyseur de type double cyanure métallique, présentant une fonctionnalité hydroxyle moyenne entre 1,80 et 2,00 et un poids moléculaire moyen (Mₙ) entre 500 à 5000 g/mole (appelé polyéther impact),
en conservant un rapport NCO/OH de 2,2 à 1,5 et en présence d'au moins un catalyseur à 20 jusqu'à 100°C.

2. Prépolymères pauvres en monomères, exempts de solvants, contenant NCO selon la revendication 1, présentant un rapport NCO/OH de 1,98 à 1,80.

3. Prépolymères pauvres en monomères, exempts de solvants, contenant NCO selon la revendication 1 ou 2, présentant une viscosité de 9000 à 13 000 mPa.s à 23°C.

4. Prêpolymères pauvres en monomères, exempts de solvants, contenant NCO selon la revendication 1, 2 ou 3, présentant une teneur en monomères résiduels inférieure à 1,95% en poids.

5. Prépolymères pauvres en monomères, exempts de solvants, contenant NCO selon la revendication 1, 2, 3 ou 4, **caractérisés en ce que** les poly(oxyde de propylène)-glycols utilisés présentent une fonctionnalité hydroxyle de 1,80 à 2,00.

6. Prépolymères pauvres en monomères, exempts de solvants, contenant NCO selon les revendications 1 à 5, **caractérisés en ce qu'**on utilisé des mélanges de poly(oxyde de propylène)-glycols présentant un poids moléculaire numérique moyen (Mₙ) de 1000 et 2000 g/mole et une fonctionnalité hydroxy de 1,98 à 2,00.

7. Procédé pour la préparation de prépolymères pauvres en monomères, exempts de solvants, contenant NCO selon les revendications 1 à 6, **caractérisé en ce qu'**on transforme l'un avec l'autre du 3-isocyanatométhyl-3,5,5-triméthylcyclohexylisocyanate (IPDI) et au moins un poly(oxyde de propylène)-glycol préparé à base d'oxyde de propylène avec utilisation d'un catalyseur de type double cyanure métallique, présentant une fonctionnalité hydroxyle moyenne entre 1,98 et 2,00 et un poids moléculaire moyen (Mₙ) entre 500 à 5000 g/mole (appelé polyéther impact) en présence d'au moins un catalyseur à 20 jusqu'à 100°C.

8. utilisation de prépolymères pauvres en monomères, exempts de solvants, contenant NCO selon les revendications 1 à 6 comme liant et/ou comme composant de liant dans des agents de revêtement, des adhésifs, des masses d'étanchéité et/ou des masses de moulage à base de polyuréthane.
